# EUROPÄISCHE PATENTSCHRIFT

(11) **EP 2 591 244 B1**
(45) Veröffentlichungstag und Bekanntmachung des Hinweises auf die Patenterteilung: **30.12.2015**
(21) Anmeldenummer: 11730302.4
(22) Anmeldetag: 07.07.2011
(51) Int. Cl.: F16D 1/068, F16B 11/00

(54) **VERFAHREN ZUM FESTLEGEN EINER HÜLSE AUF EINER WELLE**
METHOD FOR FIXING A SLEEVE ON A SHAFT
PROCÉDÉ POUR IMMOBILISER UN MANCHON SUR UN ARBRE

(30) Priorität: 08.07.2010 DE 102010031104
(43) Veröffentlichungstag der Anmeldung: 15.05.2013
(73) Patentinhaber: Aktiebolaget SKF, 415 50 Göteborg (SE)
(72) Erfinder: LIESEGANG, Hans-Jürgen, 26419 Schortens (DE); WOHLFEIL, Florian, 97464 Niederwerrn (DE)
(74) Vertreter: Schonecke, Mitja
(86) Internationale Anmeldenummer: PCT/EP2011/061506
(87) Internationale Veröffentlichungsnummer: WO 2012/004344

(56) Entgegenhaltungen:
- DE-A1-102007 052 574
- DE-U- 7 317 297
- DE-U1- 20 210 801
- US-A- 5 821 293
- US-A1- 2004 197 545

## Beschreibung

Die Erfindung betrifft ein Verfahren zum Festlegen einer Hülse auf einer Welle mittels einer Klebeverbindung. Des Weiteren betrifft die Erfindung ein System bestehend aus einer Hülse und einer Welle.

In manchen maschinenbautechnischen Anwendungen ist es erforderlich, auf einer Welle eine Hülse anzuordnen und für einen festen bleibenden Verbund zwischen Hülse und Welle zu sorgen. Eine spezielle Anwendung ist eine sog. Wear-Sleeve-Hülse, die dazu dient, eine Welle aus relativ preiswertem Material (z. B. aus Sphäroguss) mit einem Verschleißschutz zu versehen. Die Hülse kann dabei auch Laufflächen für eine Dichtlippe aufweisen.

Bekannt ist es dabei, die Hülse auf der Welle mit Presspassung anzuordnen. Zusätzlich kann vorgesehen werden, dass Klebstoff zwischen Hülse und Welle eingebracht wird, um den Verbund der beiden Teile zu verbessern. Die Hülse wird dabei zumeist mit einer Nase am Umfang ausgestattet, die dann bei der Montage (Aufpressen) umgebogen wird. Damit soll erreicht werden, dass ein Mitdrehen der Hülse mit der Welle ausgeschlossen ist und die relative axiale Position zwischen Welle und Hülse unveränderbar ist.

Eine solche Anordnung einer Hülse auf einer Welle kommt beispielsweise auch dann in Betracht, wenn die Hülse als Distanzhülse verwendet werden soll, um zwei Lager auf der Welle auf definiertem Abstand zueinander zu halten.

Das Zusammenfügen unter Nutzung einer kombinierten kraftschlüssigen (Presssitz) und stoffschlüssigen (Klebeverbindung) Verbindung wirft mitunter fertigungstechnische Probleme auf, da der Klebstoff im Prozess gehandhabt werden muss, was besondere Vorkehrungen erfordert, um einen stabilen Montageprozess aufrecht zu erhalten. Es kommt hierbei zumeist unweigerlich zu Verunreinigungen durch Klebstoff, so dass der Prozess behindert wird. Der Klebstoff muss nämlich unmittelbar bei der Montage der beiden Teile in die Passfuge zwischen die Teile eingebracht werden. Demgemäß leidet die Prozesssicherheit, insbesondere hinsichtlich der Menge an zuzuführendem Klebstoff und hinsichtlich der Sauberkeit der Fügepartner. Vielmehr sind die Prozessbedingungen von den Gegebenheiten bei der Montage bzw. vom jeweiligen Montagearbeiter abhängig. Weiterhin ist es nachteilig, dass bei manueller Einbringung des Klebstoffs Umgebungsbauteile, wie z. B. Dichtungen, mit Klebstoff benetzt werden können. Hierdurch kann die Funktion derartiger Bauteil nachteilig beeinflusst werden.

Ein Verfahren zum Verkleben von Bauteilen ist bereits in der DE 10 2007 052 574 A1 beschrieben. Der verwendete Klebstoff wird hier vor einem Aktivierungsvorgang auf das zu verklebende Bauteil aufgebracht und zunächst in eine nicht adhäsive Eigenschaft versetzt. Die DE 198 15 742 A1 offenbart ein Verfahren zur Verklebung bei einem Pleuel eines Verbrennungsmotors. Der Kleber wird hier als Folie auf das zu verklebende Bauteil aufgebracht und anschließend erhitzt, so dass sich der Klebeverbund herstellt. Weitere Lösungen offenbaren die US 5 821 293 A**,** die US 2004/197545 A1, die DE 202 10 801 U1 und die DE 73 17 297 U.

Der Erfindung liegt daher die **Aufgabe** zugrunde, ein Verfahren zum Festlegen einer Hülse auf einer Welle so fortzubilden, dass eine einfache Handhabung bei hoher Prozesssicherheit gegeben ist und somit eine einfache und wirtschaftliche Verbindung herstellbar ist. Des Weiteren soll ein entsprechendes System bestehend aus einer Hülse und einer Welle bereitgestellt werden, das sich durch die genannten Eigenschaften auszeichnet.

Die Lösung dieser Aufgabe durch die Erfindung ist dadurch gekennzeichnet, dass das Verfahren die Schritte aufweist:
a) Aufbringen des Klebstoffs auf eine zylindrische Innenfläche der Hülse und/oder auf eine zylindrische Außenfläche der Welle, und anschließendes Verbringen des Klebstoffs in eine Konsistenz, in der er nicht klebt;
b) Fügen der Hülse auf die Welle in die gewünschte relative Position, in der sie verbunden werden sollen;
c) gleichzeitig mit Schritt b) und/oder nach Schritt b): Aktivieren des Klebstoffs, so dass dieser die zylindrische Innenfläche der Hülse mit der zylindrischen Außenfläche der Welle durch Herstellen eines adhäsiven Verbunds verklebt,
wobei das Verbringen des Klebstoffs in eine Konsistenz, in der er nicht klebt, gemäß Schritt a) ein Voraushärtenlassen des Klebstoffs ist, so dass der Klebstoff bei normalen Umgebungsbedingungen, d. h. bei Raumtemperatur (20 °C), keine adhäsive Eigenschaft mehr aufweist und fest ist,
wobei bei der Aktivierung des Klebstoffs gemäß Schritt c) eine Volumenvergrößerung des Klebstoffs erfolgt, indem ein Klebstoff verwendet wird, dem ein chemisches oder physikalisches Treibmittel beigegeben ist,
wobei der Klebstoff beim Aufbringen gemäß Schritt a) zwei reaktive Komponenten aufweist, wobei die eine Komponente in einer Anzahl Kapseln angeordnet und so von der anderen Komponente getrennt ist, und
wobei bei der Durchführung des Schritts c) ein Zerstören der Trennwirkung der Kapseln erfolgt, so dass sich die in den Kapseln befindliche Komponente mit der anderen Komponente des Klebstoffs vermischt und eine Aushärtereaktion zwischen beiden Komponenten stattfinden kann, wobei die Trennwirkung der Kapseln durch in den Klebstoff und/oder in das Material der Kapsel, insbesondere durch Induktion, eingebrachte Wärmeenergie nach dem Fügevorgang gemäß Schritt b) zerstört wird.

Ferner kann vorgesehen sein, dass die Kapseln aus Kunststoffmaterial, insbesondere aus einer dünnen Kunststofffolie, bestehen.

Beim Aufbringen des Klebstoffs auf die zylindrische Innenfläche der Hülse bzw. auf die zylindrische Außenfläche der Welle wird bevorzugt Klebstoff mit einer pastösen Konsistenz verwendet.

Das Fügen von Hülse und Welle erfolgt in einem Status des Klebstoffs, in der dieser noch nicht "klebt", da die beiden Komponenten des Kunststoffs noch nicht vermischt sind. Erst nach dem Erreichen der genauen Relativposition zwischen den zu verbindenden Bauteilen wird der Klebstoff "aktiviert", d. h. die beiden Komponenten in Kontakt gebracht, so dass der Klebeverbund hergestellt wird.

Die vorgeschlagene Verfahrensweise bietet den Vorteil, dass in kostengünstiger Weise ein stabiler Klebeverbund herstellbar ist. Es können problemlos unterschiedliche Werkstoffe mit unterschiedlichen Material-Kennwerten miteinander verbunden werden.

Die Hülse kann eine Distanzhülse sein, mit der zwei Lager, die auf der Welle zu montieren sind, auf definiertem axialen Abstand gehalten werden können. Die Hülse kann dabei eine außenzylindrische Anlauffläche für eine Dichtlippe aufweisen.

Erfindungsgemäß ist also die Hülse (alternativ auch die Welle) mit einer vorapplizierten Klebschicht versehen. Der Klebstoff wird also als integrierte Komponente der Hülse mit geliefert. Bei der Fertigung der Hülse wird der Klebstoff aufgebracht und vorausgehärtet, so dass er im Anlieferungszustand an den Benutzer keinerlei adhäsive Eigenschaft aufweist. Erst nach dem Fügen der Hülse in die gewünschte Relativposition während der Montage auf die Welle wird der Klebstoff aktiviert. Hierdurch wird der eigentliche Aushärtprozess des Klebstoffs gestartet, so dass im Anschluss daran eine feste, adhäsive Verbindung zwischen der Welle und der Hülse erreicht wird.

Generell können zur Realisierung der Klebverbindung verschiedene Klebstoffsysteme zum Einsatz kommen. Oben erläutert ist ein Zwei-Komponenten-Reaktivklebstoff, wobei die eine Komponente zunächst in Kapseln abgeschlossen vorliegt; die andere Komponente befindet sich in der Trägersubstanz des Klebstoffs. Durch Zerstörung der Kapseln (durch UV-Licht, durch mechanischen Druck oder durch Wärme) wird die eine Komponente frei, und es kann die chemische Aushärtereaktion im Klebstoff beginnen.

Bei der Aktivierung des Klebstoffs gemäß obigem Schritt c) erfolgt eine Volumenvergrößerung des Klebstoffs. Zwecks dieser Volumenvergrößerung wird ein Klebstoff verwendet, dem ein chemisches oder physikalisches Treibmittel beigegeben ist. Bei physikalisch wirkenden Treibmitteln ist die Volumenvergrößerung eine physikalische Folge des Erwärmens von mit Gas oder verdampfbarer Flüssigkeit gefüllten Mikrohohlkugeln. Bei chemischen Treibmitteln wird durch eine chemische Reaktion ein Gas abgespaltet, welches die Volumenvergrößerung des Klebstoffs bewirkt.

Es sind aber auch andere Mechanismen der Herstellung der ausgehärteten Klebstoffverbindung möglich.

Möglich ist es auch, durch Wärme den Klebstoff zu aktivieren (z. B. im Falle von Epoxidharz), wobei die Wärme dem Klebstoff z. B. mittels Induktion oder durch Heißluft zugeführt werden kann.

Einsetzbar ist auch ein Schmelzklebstoff ("Hotmelt"), der bei Raumtemperatur fest ist und nach dem Fügen von Hülse und Welle durch Aufschmelzen verarbeitbar ist und hierdurch die adhäsive Wirkung entfaltet. Die heiße Klebstoffschmelze geht dann den adhäsiven Verbund ein. Unmittelbar nach dem Abkühlen und dem Erstarren des Klebstoffs ist dann die Verbindung zwischen Hülse und Welle fest.

Die vorgeschlagene Vorgehensweise und das beschriebene System haben diverse Vorteile:
Die Prozesssicherheit kann wesentlich erhöht werden. Dadurch, dass der Klebstoff vorappliziert wird, kann eine konstante und gleichmäßige Klebeschicht sichergestellt werden.

Der Benutzer erhält bereits den passenden und optimalen Klebstoff zusammen mit der Hülse. Demgemäß besteht keine Gefahr, dass der falsche Klebstoff verwendet wird.

Ein Verschmutzen der Peripher-Bauteile während der Endmontage - verursacht durch den bisher erforderlichen Klebstoff-Auftrag - ist nicht mehr zu befürchten. Durch den vorapplizierten Klebstoff ergibt sich auch ein vorteilhafter Korrosionsschutz des mit Klebstoff versehenen Bauteils. Durch diesen Korrosionsschutz durch die Klebeschicht ist es möglich, den bisher erforderlichen teuren nichtrostenden Stahl als Material für die Hülse zu ersetzen durch einen günstigeren Baustahl. Baustahl bietet weiterhin den Vorteil, dass es besser härtbar ist bzw. einsatzhärtbar ist als es bei nichtrostendem Stahl der Fall ist. Weiterhin ist Baustahl leichter zerspanbar, was Vorteile bei der Fertigung der Hülse bringt, weil hierdurch weniger Verschleiß an den Schleifwerkzeugen auftritt.

Gegebenenfalls ist es weiterhin möglich, auf das bisher erforderliche Vorbehandeln bzw. Reinigen der Welle von Öl und Verschmutzung verzichten zu können, wenn ein Klebstoff verwendet wird, der in gewissem Maße Verschmutzungen widersteht.

In der Zeichnung ist ein Ausführungsbeispiel der Erfindung dargestellt. Es zeigen:
- Fig. 1: schematisch den Radialschnitt durch eine Welle und eine Hülse, bevor die Hülse auf der Welle angeordnet und auf dieser fixiert wird, und
- Fig. 2: schematisch den Radialschnitt durch die Anordnung von Welle und Hülse, nachdem diese auf der Welle platziert wurde.

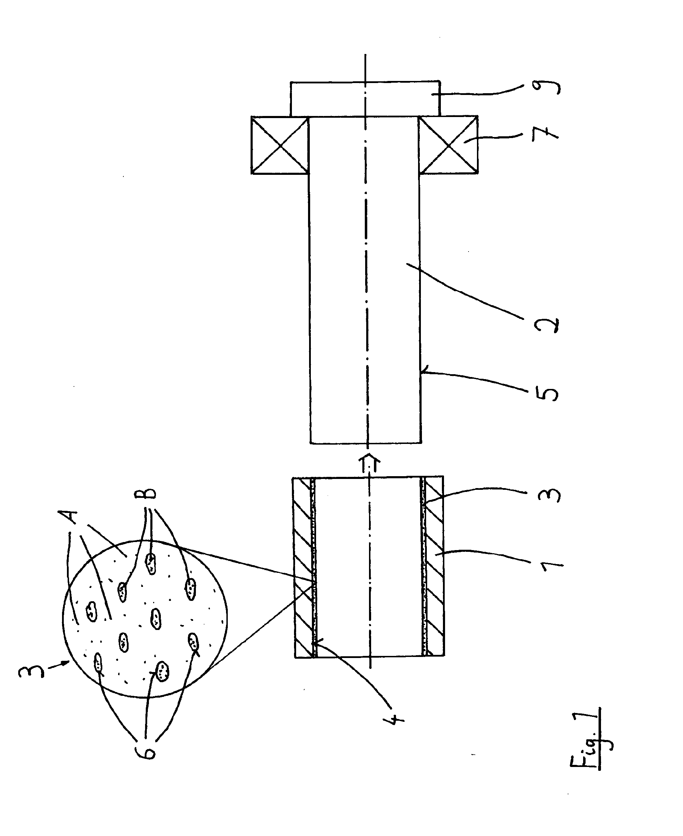

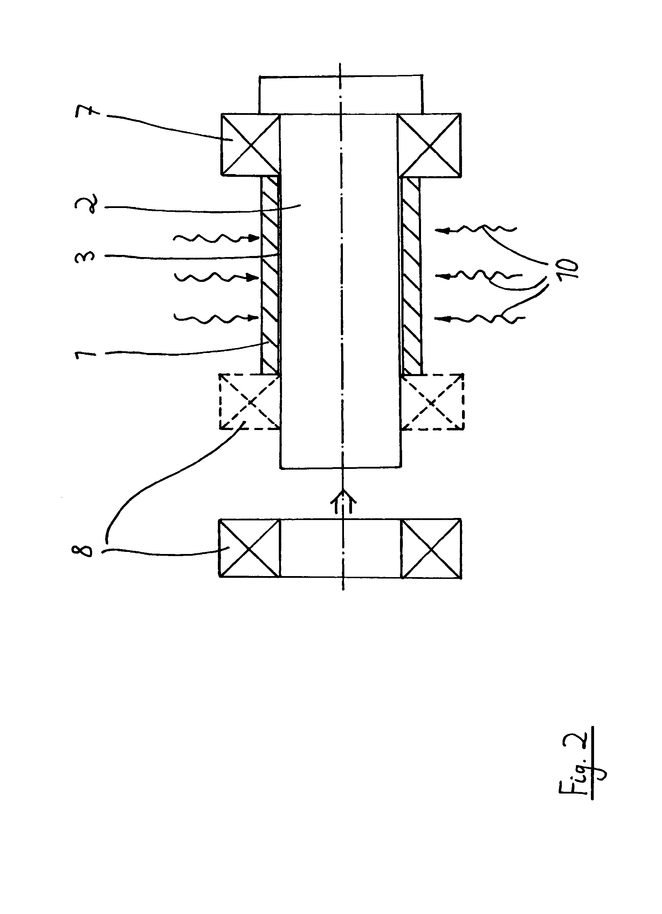

In Fig. 1 ist eine Welle 2 zu sehen, die von einer Lageranordnung gelagert wird. Die Lageranordnung besteht aus dem in Fig. 1 dargestellten Lager 7 und einem nur in Fig. 2 dargestellten Lager 8. In Fig. 1 ist zu sehen, dass das Lager 7 auf der Welle 2 bis zu einem Absatz 9 axial aufgeschoben wurde.

Nunmehr geht es darum, eine Hülse 1, die vorliegend als Abstandshülse fungiert, auf die Welle 2 zu montieren und zu befestigen. Die Hülse 1 weist eine zylindrische Innenfläche 4 auf, die auf der zylindrischen Außenfläche 5 der Welle 2 zu platzieren ist. Zwischen der zylindrischen Innenfläche 4 der Hülse 1 und der zylindrischen Außenfläche 5 der Welle liegt dabei Presspassung vor.

Die Hülse 1 ist vor dem Aufpressen auf die Welle 2 mit einer Schicht Klebstoff 3 versehen worden. Dieser Klebstoff ist zum Zeitpunkt des Aufpressens der Hülse 1 auf die Welle 2 vorausgehärtet, d. h. er hat keine adhäsive Eigenschaft mehr. Das ermöglicht die problemlose Handhabung der Hülse vor dem Montageprozess mit der Welle.

Die schematische vergrößerte Darstellung zeigt in Fig. 1 den prinzipiellen Aufbau des Klebstoffs 3. Dieser besteht aus zwei Komponenten A und B. Die eine Komponente, nämlich die Komponente A, ist in der Trägersubstanz des Klebstoffs gelöst. Die Komponente B ist indes in Mikrokapseln 6 untergebracht. Die Komponente B liegt also vor dem Fügen der Hülse 1 mit der Welle 2 getrennt von der Komponente A vor.

Die Kapseln 6 können aus sehr dünnem Kunststoffmaterial bestehen, das sehr empfindlich gegen mechanische Kräfte und/oder gegen thermische Beaufschlagung ist. Demgemäß kann durch äußere mechanische Kräfte bzw. durch Erhitzung der Kapseln 6 bzw. deren Inhalt ein Platzen der Kapseln 6 bewerkstelligt werden. Dies hat zur Folge, dass sich die beiden Klebstoffkomponenten A und B vermischen und miteinander reagieren können.

Ein Platzen der Kapseln 6 bei der Beaufschlagung mittels Wärme wird dadurch begünstig, wenn sich die Komponente B bei der Erwärmung zumindest geringfügig ausdehnt.

Zum Fügen der Bauteile 1 und 2 wird die Hülse 1 in Pfeilrichtung axial auf die Welle 2 aufgeschoben bzw. aufgepresst.

Es sei angemerkt, dass auch vorgesehen werden kann, die zylindrische Außenfläche 5 der Welle 2 mit Klebstoff 3 zu versehen.

Befinden sich die Hülse 1 und die Welle 2 in der gewünschten Relativposition, in der der Kleberverbund hergestellt werden soll, wird im vorliegenden Beispielsfall - was in Fig. 2 gezeigt ist - mittels einer Induktionsspule eine Erhitzung des Klebstoffs 3 und insbesondere der Komponente B in den Kapseln 6 verursacht. Die entstehende Wärme (symbolisiert durch die Bezugsziffer 10) bringt die Kapseln 6 zum Platzen, so dass die Komponente B freigesetzt wird und sich mit der Komponente A vermischen kann. Es kommt mithin zu der gewünschten Reaktion zwischen den beiden Klebstoffkomponenten A und B und zu einem Aushärten des Klebstoffs 3, wodurch die beiden Teile 1 und 2 fest miteinander verbunden werden.

Wie in Fig. 2 angedeutet ist, kann nach der festen Verbindung von Hülse und Welle das andere Lager 8 der Lageranordnung auf die Welle 2 aufgeschoben werden (s. Pfeil in Fig. 2), um die Welle 2 zu lagern.

Als Klebstoff wird bevorzugt ein chemisch härtender Klebstoff eingesetzt. Bei diesem Klebstoff (auch als Reaktionsklebstoff bezeichnet) werden die einzelnen chemischen Bausteine (hier: die Komponenten A und B) für den Klebstoff im entsprechenden Verhältnis zum Klebstoff 3 gemischt; von diesem wird die in Fig. 1 skizzierte Schicht auf eines der Bauteile 1, 2 aufgebracht. Die Verfestigung erfolgt dann durch eine chemische Reaktion der Komponenten A und B.

Die hier bevorzugten Reaktionsklebstoffe sind als zwei- bzw. mehrkomponentige Klebstoffe ausgeführt. In den einzelnen Komponenten A und B befindet sich die Monomere, d. h. die Grundbausteine des bei der Reaktion entstehenden Polymers. Eine der beiden Komponenten kann Harzmonomere (oder auch Binder) enthalten, während die andere Komponente Härter enthält. Als weitere Inhaltsstoffe der Zubereitungen können Stabilisatoren, Thixotropiermittel, Beschleuniger und weitere Additive zum Einsatz kommen.

Mit dem Kontakt von Harz und Härter - nach dem Platzen der Kapseln 6 - startet die chemische Reaktion zum Klebstoffpolymer. Durch die fortschreitende Reaktion nimmt die Viskosität der Mischung stetig zu. In der Aushärtezeit baut sich die Endfestigkeit der Verklebung auf. Diese Aushärtezeit wird stark von äußeren Einflüssen, insbesondere von der Temperatur, beeinflusst. Eine Temperaturerhöhung führt zu einer beschleunigten Aushärtung und oft auch zu einer höheren Festigkeit, während niedrigere Temperaturen die Aushärtezeit verlängern.

Für besondere Anwendungsfälle werden auch Drei- oder Mehrkomponentenklebstoffe eingesetzt, die grundsätzlich bei der vorliegenden Erfindung auch eingesetzt werden können.

Vorteilhaft ist es, wenn die Aushärtung des Klebstoffs unter Ausschluss von Sauerstoff (also anaerob) erfolgt, wenn der Klebstoff in einer engen Klebefuge von der Umgebungsluft abgeschlossen wird. Es können nur metallische Werkstoffe damit geklebt werden, da für die Aushärtung freie Metallionen als Reaktionspartner benötigt werden (bzw. ein Fügepartner muss in der Lage sein, freie Metallionen abgeben zu können).

### Bezugszeichenliste

- 1: Hülse
- 2: Welle
- 3: Klebstoff
- 4: zylindrische Innenfläche
- 5: zylindrische Außenfläche
- 6: Kapsel
- 7: Lager
- 8: Lager
- 9: Absatz
- 10: Wärme

- A: Komponente des Klebstoffs
- B: Komponente des Klebstoffs

## Patentansprüche

1. Verfahren zum Festlegen einer Hülse (1) auf einer Welle (2) mittels einer Klebeverbindung, wobei
das Verfahren die Schritte aufweist:
a) Aufbringen des Klebstoffs (3) auf eine zylindrische Innenfläche (4) der Hülse (1) und/oder auf eine zylindrische Außenfläche (5) der Welle (2), und anschließendes Verbringen des Klebstoffs (3) in eine Konsistenz, in der er nicht klebt;
b) Fügen der Hülse (1) auf die Welle (2) in die gewünschte relative Position, in der sie verbunden werden sollen;
c) gleichzeitig mit Schritt b) und/oder nach Schritt b): Aktivieren des Klebstoffs (3), so dass dieser die zylindrische Innenfläche (4) der Hülse (1) mit der zylindrischen Außenfläche (5) der Welle (2) durch Herstellen eines adhäsiven Verbunds verklebt,
wobei das Verbringen des Klebstoffs (3) in eine Konsistenz, in der er nicht klebt, gemäß Schritt a) ein Voraushärtenlassen des Klebstoffs (3) ist, so dass der Klebstoff (3) bei Raumtemperatur (20 °C) keine adhäsive Eigenschaft mehr aufweist,
wobei bei der Aktivierung des Klebstoffs gemäß Schritt c) eine Volumenvergrößerung des Klebstoffs erfolgt, indem ein Klebstoff verwendet wird, dem ein chemisches oder physikalisches Treibmittel beigegeben ist,
**dadurch gekennzeichnet**,
das der Klebstoff (3) beim Aufbringen gemäß Schritt a) zwei reaktive Komponenten (A, B) aufweist, wobei die eine Komponente (B) in einer Anzahl Kapseln (6) angeordnet und so von der anderen Komponente (A) getrennt ist, und
wobei bei der Durchführung des Schritts c) ein Zerstören der Trennwirkung der Kapseln (6) erfolgt, so dass sich die in den Kapseln (6) befindliche Komponente (B) mit der anderen Komponente (A) des Klebstoffs (3) vermischt und eine Aushärtereaktion zwischen beiden Komponenten (A, B) stattfinden kann, wobei die Trennwirkung der Kapseln (6) durch in den Klebstoff (3) und/oder in das Material der Kapsel (6), insbesondere durch Induktion, eingebrachte Wärmeenergie nach dem Fügevorgang gemäß Schritt b) zerstört wird.

2. Verfahren nach Anspruch 1, **dadurch gekennzeichnet, dass** die Kapseln (6) aus Kunststoffmaterial, insbesondere aus einer dünnen Kunststofffolie, bestehen.

## Claims

1. Method for fixing a sleeve (1) on a shaft (2) by means of an adhesive bond, the method comprising the steps of:
a) applying the adhesive (3) to a cylindrical inner surface (4) of the sleeve (1) and/or to a cylindrical outer surface (5) of the shaft (2), and subsequently bringing the adhesive (3) to a consistency in which it does not stick;
b) joining the sleeve (1) onto the shaft (2) in the desired relative position in which they are to be connected;
c) simultaneously with step b) and/or following step b): activating the adhesive (3) such that it bonds the cylindrical inner surface (4) of the sleeve (1) to the cylindrical outer surface (5) of the shaft (2) by producing an adhesive bond,
wherein, the bringing of the adhesive (3) to a consistency in which it does not stick, according to step a), is a prior curing of the adhesive (3) such that the adhesive (3) no longer has any adhesive property at room temperature (20°C), wherein, during the activation of the adhesive according to step c), an increase in volume of the adhesive takes place, in that an adhesive to which a chemical or physical expanding agent has been added is used,
**characterized in that**, when it is applied according to step a), the adhesive (3) has two reactive components (A, B), the one component (B) being arranged in a number of capsules (6) and thus separated from the other component (A), and
wherein, during the implementation of step c), the separating effect of the capsules (6) is destroyed such that the component (B) located in the capsules (6) mixes with the other component (A) of the adhesive (3) and a curing reaction between the two components (A, B) can take place, the separating effect of the capsules (6) being destroyed by thermal energy being introduced into the adhesive (3) and/or into the material of the capsule (6), in particular by induction, after the joining operation according to step b).

2. Method according to Claim 1, **characterized in that** the capsules (6) consist of plastics material, in particular a thin sheet of plastic.

## Revendications

1. Procédé pour immobiliser un manchon (1) sur un arbre (2) au moyen d'une connexion par collage, le procédé présentant les étapes suivantes :
a) appliquer l'adhésif (3) sur une surface intérieure cylindrique (4) du manchon (1) et/ou sur une surface extérieure cylindrique (5) de l'arbre (2), et amener ensuite l'adhésif (3) à une consistance à laquelle il ne colle pas ;
b) assembler le manchon (1) sur l'arbre (2) dans la position relative souhaitée dans laquelle ils doivent être connectés ;
c) simultanément à l'étape b) et/ou après l'étape b) : activer l'adhésif (3) de telle sorte que celui-ci colle la surface intérieure cylindrique (4) du manchon (1) à la surface extérieure cylindrique (5) de l'arbre (2) par création d'un assemblage adhésif,
le fait d'amener l'adhésif (3) à une consistance à laquelle il ne colle pas selon l'étape a) étant une étape de durcissement préalable de l'adhésif (3) de telle sorte que l'adhésif (3) ne présente plus de propriétés adhésives à une température ambiante (20 °C),
une augmentation du volume de l'adhésif se produisant lors de l'activation de l'adhésif selon l'étape c), un agent propulseur chimique ou physique étant ajouté à l'adhésif utilisé,
**caractérisé en ce que**
l'adhésif (3), lors de l'application selon l'étape a), présente deux composants réactifs (A, B), l'un des composants, le composant (B), étant disposé dans un certain nombre de capsules (6) et étant ainsi séparé de l'autre composant (A), et
la mise en oeuvre de l'étape c) entraînant une destruction de l'effet séparateur des capsules (6) de sorte que le composant (B) se trouvant dans les capsules (6) soit mélangé à l'autre composant (A) de l'adhésif (3) et qu'une réaction de durcissement puisse avoir lieu entre les deux composants (A, B), l'effet séparateur des capsules (6) étant détruit par l'énergie thermique introduite dans l'adhésif (3) et/ou dans le matériau des capsules (6), en particulier par induction, après l'opération d'assemblage selon l'étape b).

2. Procédé selon la revendication 1, **caractérisé en ce que** les capsules (6) se composent d'un matériau en plastique, en particulier d'un film de plastique mince.
